# EUROPEAN PATENT APPLICATION

(11) **EP 4 083 703 A1**
(43) Date of publication of application: **02.11.2022**
(21) Application number: 21209460.1
(22) Date of filing: 22.11.2021
(51) Int. Cl.: G03B 21/16, B60Q 1/00

(54) **PROJECTION DEVICE**

(30) Priority: 28.04.2021 TW 110115450
(71) Applicant: Coretronic Corporation, Hsin-Chu 300 (TW)
(72) Inventor: CHIEN, WEI-MIN, 300 Hsin-Chu (TW); HOU, YI-CHENG, 300 Hsin-Chu (TW); HU, TUNG-CHOU, 300 Hsin-Chu (TW); KUO, MING-YING, 300 Hsin-Chu (TW)
(74) Representative: Ter Meer Steinmeister & Partner

(57) **Abstract**

A projection device includes a heat source module, a heat storage module, and a heat dissipation connecting element. The heat source module is configured to generate a light beam. The heat storage module includes a storage tank and a heat storage material, and the heat storage material is filled into the storage tank. The heat dissipation connecting element connects the heat source module and the heat storage module. Heat generated by the heat source module is transferred to the heat storage module through the heat dissipation connecting element.

## Description

This application claims the priority of Taiwan application serial no. 110115450, filed on April 28, 2021.

### BACKGROUND

### Technical Field

The disclosure relates to a projection device, and particularly relates to a projection device including a heat storage module.

### Description of Related Art

Currently, the applications of projectors in different fields have become increasingly diversified. Taking the welcome lamp in the automotive market as an example, in some high-end cars, the welcome lamp module is installed at the bottom of the vehicle door, and the existing projector optical elements are embedded in the car shell. However, due to space constraints, the projection module needs to be miniaturized, so a fan cannot be added for heat dissipation of the system, but only natural convection is relied on as the main heat dissipation path of the system. Therefore, the temperature of key components in the projection module rises rapidly, and only a short operation time is available or only poor performance can be provided to meet the operation time required by the welcome lamp. In addition, the miniaturized projection module is also confined by the size of the heat dissipation module. The heat dissipation capability of the heat dissipation module is associated with its effective heat dissipation area; i.e., the smaller the heat dissipation module, the smaller the effective heat dissipation area.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure were acknowledged by a person of ordinary skill in the art.

### SUMMARY

The disclosure provides a projection device which exhibits efficient heat dissipation effect.

Other objectives and advantages of the disclosure may be further understood from the technical features disclosed herein.

The object is solved by the features of the independent claims. Preferred embodiments are given in the dependent claims.

To achieve one, part, or all of the above objectives or other objectives, an embodiment of the disclosure provides a projection device including a heat source module, a heat storage module, and a heat dissipation connecting element. The heat source module is configured to generate a light beam. The heat storage module includes a storage tank and a heat storage material, and the heat storage material is filled into the storage tank. The heat dissipation connecting element connects the heat source module and the heat storage module. Heat generated by the heat source module is transferred to the heat storage module through the heat dissipation connecting element.

In one or more embodiments of the disclosure, the heat storage material may include a phase change material or a heat capacity material having a specific heat capacity greater than 2000 J/(K·kg).

In one or more embodiments of the disclosure, the phase change material may be a solid-liquid phase change material.

In one or more embodiments of the disclosure, the phase change material may include paraffin or indium alloy.

In one or more embodiments of the disclosure, the heat capacity material may include water or paraffin.

In one or more embodiments of the disclosure, the heat source module may include a light source module.

Preferably, the light beam may include an illumination beam.

In one or more embodiments of the disclosure, the projection device further may include an optical engine module disposed on one side of the light source module and located on a transmission path of the illumination beam.

In one or more embodiments of the disclosure, the light source module may include a first light source module and a second light source module.

Preferably, the heat storage module may include a first heat storage module and a second heat storage module.

Preferably the heat dissipation connecting element may include a first heat dissipation connecting element and a second heat dissipation connecting element.

The first light source module may connected to the first heat storage module through the first heat dissipation connecting element.

The second light source module may be connected to the second heat storage module through the second heat dissipation connecting element.

In one or more embodiments of the disclosure, the light source module may include a first light source module and a second light source module.

The first light source module and the second light source module may be connected to the heat storage module through the heat dissipation connecting element.

In one or more embodiments of the disclosure, the heat source module may further include a light valve module.

The light valve module may be disposed in the optical engine module.

The light beam may further include an image beam.

The light source module may include a first light source module and a second light source module.

The heat storage module may include a first heat storage module, a second heat storage module, and a third heat storage module.

The heat dissipation connecting element may include a first heat dissipation connecting element, a second heat dissipation connecting element, and a third heat dissipation connecting element.

The first light source module may be connected to the first heat storage module through the first heat dissipation connecting element.

The second light source module may be connected to the second heat storage module through the second heat dissipation connecting element.

The light valve module may be connected to the third heat storage module through the third heat dissipation connecting element.

In one or more embodiments of the disclosure, the heat source module may further include a light valve module.

Tight valve module may be disposed in the optical engine module.

The light beam may further include an image beam.

The light source module may include a first light source module and a second light source module.

The first light source module, the second light source module, and the light valve module may be connected to the heat storage module through the heat dissipation connecting element.

In one or more embodiments of the disclosure, the heat source module may include a light valve module.

The light beam may include an image beam.

In one or more embodiments of the disclosure, the heat dissipation connecting element may include a heat pipe, a vapor chamber, or a heat dissipation plate.

In one or more embodiments of the disclosure, the projection device may further include a thermal interface material layer disposed between the heat source module and the heat dissipation connecting element and between the heat storage module and the heat dissipation connecting element.

In one or more embodiments of the disclosure, the thermal interface material layer may include a thermal grease or a thermally conductive film.

In one or more embodiments of the disclosure, the heat storage module may include a body part and a heat dissipation fin part.

The body part may include the storage tank.

The heat dissipation fin part may be connected to the body part and/or may be located above the storage tank.

In one or more embodiments of the disclosure, the heat dissipation connecting element may include a body part and a heat dissipation fin part.

The body part may have an upper surface and a lower surface opposite to each other.

The heat source module and the heat storage module may be located on the upper surface.

The heat dissipation fin part may be connected to the body part and/or may be located on the lower surface.

In one or more embodiments of the disclosure, an orthographic projection of the storage tank on the body part may overlap with an orthographic projection of the heat dissipation fin part on the body part.

Based on the above, the embodiments of the disclosure exhibit at least one of the following advantages or effects. In the projection device of the disclosure, the heat storage module includes the storage tank and the heat storage material, and the heat storage material is filled into the storage tank. The heat dissipation connecting element connects the heat source module and the heat storage module, and heat generated by the heat source module is transferred to the heat storage module through the heat dissipation connecting element. Accordingly, the heat storage module may quickly store the heat generated by the heat source module, so the projection device of the disclosure can maintain an optimal operating brightness during short-time operation. In addition, in the disclosure, since it is not required to provide the projection device with a fan, an advantage of miniaturization can be achieved.

Other objectives, features, and advantages of the disclosure will be further understood from the further technological features disclosed by the embodiments of the disclosure wherein there are shown and described exemplary embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure, together with the description, serve to explain the principles of the disclosure.
FIG. 1 is a schematic partial view of a projection device of an embodiment of the disclosure.
FIG. 2 is a schematic partial view of a projection device of another embodiment of the disclosure.
FIG. 3 is a schematic partial view of a projection device of another embodiment of the disclosure.
FIG. 4 is a top view of a projection device according to another embodiment of the disclosure.
FIG. 5 is a top view of a projection device according to another embodiment of the disclosure.
FIG. 6 is a top view of a projection device according to another embodiment of the disclosure.
FIG. 7 is a top view of a projection device according to another embodiment of the disclosure.

### DESCRIPTION OF THE EMBODIMENTS

In the following detailed description of the exemplary embodiments, reference is made to the accompanying drawings which form a part hereof, and in which are shown by way of illustration specific embodiments in which the disclosure may be practiced. In this regard, directional terminology, such as "top," "bottom," "front," "back," etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

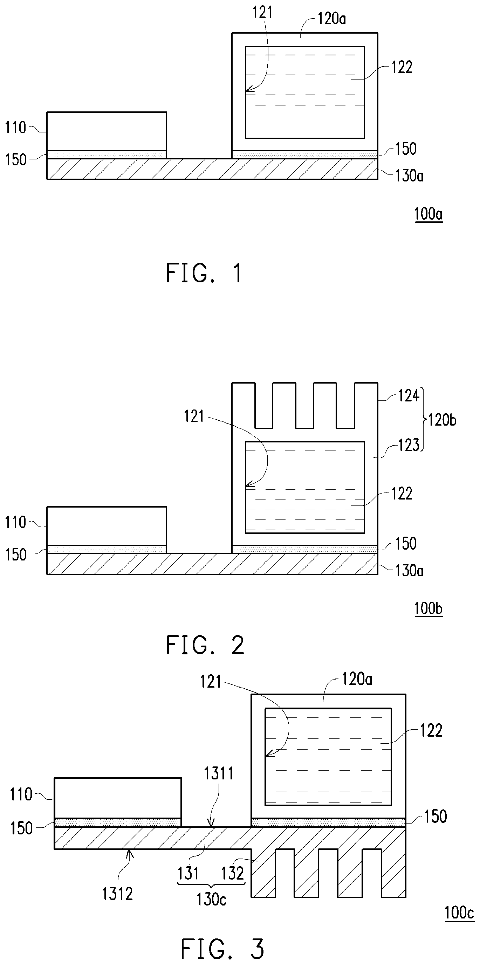

FIG. 1 is a schematic partial view of a projection device according to an embodiment of the disclosure. Referring to FIG. 1, in this embodiment, a projection device 100a includes a heat source module 110, a heat storage module 120a, and a heat dissipation connecting element 130a. The heat source module 110 is configured to generate a light beam. The heat storage module 120a includes a storage tank 121 and a heat storage material 122, and the heat storage material 122 is filled into the storage tank 121. The heat dissipation connecting element 130a connects the heat source module 110 and the heat storage module 120a. Specifically, heat generated by the heat source module 110 is transferred to the heat storage module 120a through the heat dissipation connecting element 130a.

In this embodiment, the projection device 100a is, for example, a small-sized projection device for a car, which is disposed at the bottom on the inner side of the vehicle door and embedded in the car shell, and may serve as a welcome lamp. The heat source module 110 is, for example, a light source module, a light valve module, or a similar component which generates heat during operation. As a light source module, the heat source module 110 is configured to generate an illumination beam. As a light valve module, the heat source module 110 is located on the transmission path of an illumination beam and receives and modulates the illumination beam to form an image beam. When the vehicle door is opened, the projection device 100a projects various colors or various patterns/texts through the heat source module 110 to greet the passenger.

In addition, the heat storage material 122 of the heat storage module 120a of this embodiment is, for example, a phase change material. In this embodiment, the phase change material is a solid-liquid phase change material such as paraffin or indium alloy. Since the phase change material has high latent heat, when the temperature reaches the melting point of the phase change material, the phase change material in the molten state may continuously absorb the heat from the heat source module 110 while the temperature is maintained at a constant value or close to a constant value. Accordingly, the heat of the heat source module 110 can be temporarily and effectively absorbed by the phase change material, thereby damage of the heat source module 110 due to an excessively high temperature can be avoided.

In another embodiment, the heat storage material 122 may also be, for example, a heat capacity material having a specific heat capacity greater than 2000 J/(K kg). In this embodiment, the heat capacity material is, for example, water or paraffin. Within the temperature variation range of the projection device 100a, the specific heat capacity of water is about 4200 J/(K·kg), and the specific heat capacity of paraffin is about 2200 J/(K kg). The heat capacity material may absorb a large amount of heat from the heat source module 110 when the temperature variation is small. Accordingly, the heat of the heat source module 110 can be temporarily and effectively absorbed by the heat capacity material, thereby damage of the heat source module 110 due to an excessively high temperature can be avoided. In brief, the heat storage material 122 of this embodiment may be determined depending on the operating temperature and heat dissipation requirements of the projection device 100a, and the selection of the heat storage material 122 is not limited to those described above.

Moreover, the heat dissipation connecting element 130a of this embodiment is, for example, a heat pipe, a vapor chamber, or a heat dissipation plate. With the heat source module 110 and the heat storage module 120a connected through the heat dissipation connecting element 130a, the heat transfer efficiency can be effectively improved. Therefore, the heat generated by the heat source module 110 can be more quickly and efficiently transferred to the heat storage module 120a. In addition, the heat dissipation connecting element 130a also increases the overall heat dissipation area of the projection device 100a.

In this embodiment, the projection device 100a further includes a thermal interface material (TIM) layer 150, and the thermal interface material layer 150 is disposed between the heat source module 110 and the heat dissipation connecting element 130a and between the heat storage module 120a and the heat dissipation connecting element 130a. Through the thermal interface material layer 150, the heat transfer between the heat source module 110 and the heat dissipation connecting element 130a and the heat transfer between the heat storage module 120a and the heat dissipation connecting element 130a can be effectively improved, and the heat generated by the heat source module 110 can be more quickly and efficiently transferred to the heat storage module 120a. Specifically, the thermal interface material layer 150 of this embodiment is, for example, a thermal grease or a thermally conductive film.

In brief, in this embodiment, the heat generated by the heat source module 110 is transferred to the heat storage module 120a through the heat dissipation connecting element 130a, and the heat storage module 120a may quickly store the heat generated by the heat source module 110, so that the projection device 100a of this embodiment can maintain an optimal operating brightness during short-time operation. In addition, since it is not required to provide the projection device 100a of this embodiment with a fan, an advantage of miniaturization can be achieved.

It is noted that some of the reference numerals and descriptions of the above embodiment will apply to the following embodiments. The same reference numerals will represent the same or similar components and the descriptions of the same technical contents will be omitted. Reference may be made to the above embodiment for the omitted descriptions, which will not be repeated in the following embodiments.

FIG. 2 is a schematic partial view of a projection device according to another embodiment of the disclosure. Referring to FIG. 1 and FIG. 2, a projection device 100b of this embodiment is similar to the projection device 100a of FIG. 1, and the difference therebetween is that, in this embodiment, a heat storage module 120b includes a body part 123 and a heat dissipation fin part 124. The body part 123 includes the storage tank 121. The heat dissipation fin part 124 is connected to the body part 123 and is located above the storage tank 121. Accordingly, the heat generated by the heat source module 110 of this embodiment can be transferred to the body part 123 of the heat storage module 120b for storage, and meanwhile the heat can be transferred to the heat dissipation fin part 124 of the heat storage module 120b to be discharged by natural convection. In other words, the heat dissipation fin part 124 of the heat storage module 120b provides an additional heat dissipation path, so that the heat dissipation effect of the projection device 100b of this embodiment can be effectively improved.

FIG. 3 is a schematic partial view of a projection device according to another embodiment of the disclosure. Referring to FIG. 1 and FIG. 3, a projection device 100c of this embodiment is similar to the projection device 100a of FIG. 1, and the difference therebetween is that, in this embodiment, a heat dissipation connecting element 130c includes a body part 131 and a heat dissipation fin part 132. The body part 131 has an upper surface 1311 and a lower surface 1312 opposite to each other. The heat source module 110 and the heat storage module 120a are located on the upper surface 1311. The heat dissipation fin part 132 is connected to the body part 131 and is located on the lower surface 1312. In addition, an orthographic projection of the storage tank 121 on the body part 131 overlaps with an orthographic projection of the heat dissipation fin part 132 on the body part 131. Accordingly, the heat generated by the heat source module 110 of this embodiment can be transferred to the heat storage module 120a for storage, and meanwhile the heat can be transferred to the heat dissipation fin part 132 of the heat dissipation connecting element 130c to be discharged by natural convection. In other words, the heat dissipation fin part 132 of the heat dissipation connecting element 130c provides an additional heat dissipation path, so that the heat dissipation effect of the projection device 100c of this embodiment can be effectively improved.

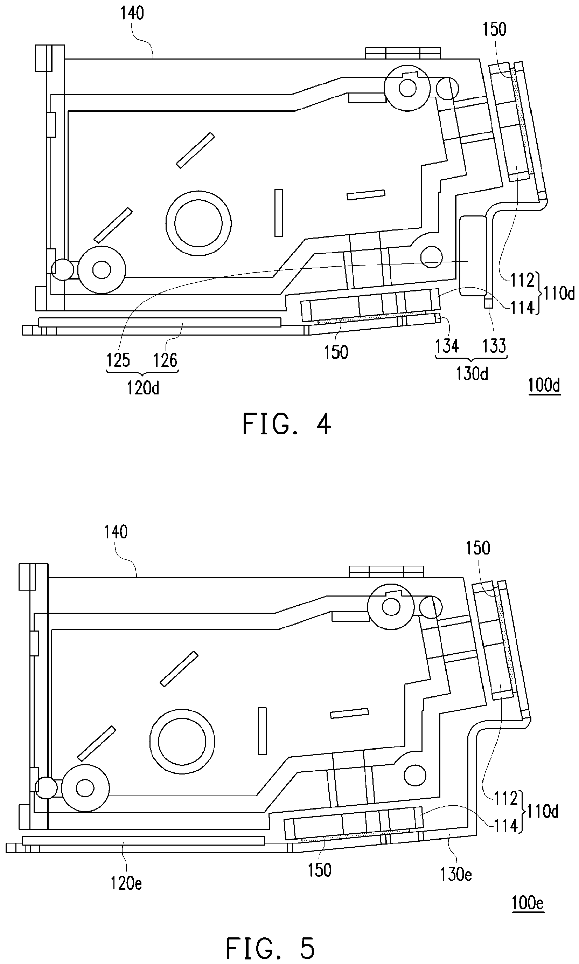

FIG. 4 is a top view of a projection device according to another embodiment of the disclosure. Referring to FIG. 1 and FIG. 4, a projection device 100d of this embodiment is similar to the projection device 100a of FIG. 1, and the difference therebetween is that, in this embodiment, the heat source module is specifically a light source module 110d configured to provide an illumination beam. Also, the projection device 100d of this embodiment further includes an optical engine module 140 which is disposed on one side of the light source module 110d and is located on the transmission path of the illumination beam. Specifically, the light source module 110d of this embodiment includes a first light source module 112 and a second light source module 114. A heat storage module 120d includes a first heat storage module 125 and a second heat storage module 126. A heat dissipation connecting element 130d includes a first heat dissipation connecting element 133 and a second heat dissipation connecting element 134. The first light source module 112 is connected to the first heat storage module 125 through the first heat dissipation connecting element 133, and the second light source module 114 is connected to the second heat storage module 126 through the second heat dissipation connecting element 134.

As shown in FIG. 4, in this embodiment, the heat storage module 120d and the heat dissipation connecting element 130d are arranged along the outer contours of the light source module 110d and the optical engine module 140. Therefore, the space occupied by the heat storage module 120d and the heat dissipation connecting element 130d is small, and the projection device 100d of this embodiment has a small volume and can be installed in a narrow space of the vehicle body. In addition, with the heat dissipation method of this embodiment, even if natural convection in the vehicle body is poor and it is difficult to install a fan, heat dissipation can still be effectively performed.

FIG. 5 is a top view of a projection device according to another embodiment of the disclosure. Referring to FIG. 4 and FIG. 5, a projection device 100e of this embodiment is similar to the projection device 100d of FIG. 4, and the difference therebetween is in that, in this embodiment, only one heat dissipation connecting element 130e and one heat storage module 120e are provided. The first light source module 112 and the second light source module 114 of the light source module 110d are connected to the heat storage module 120e through the heat dissipation connecting element 130e. Compared to the projection device 100d of FIG. 4, the projection device 100e of this embodiment can have a smaller volume and lower manufacturing costs.

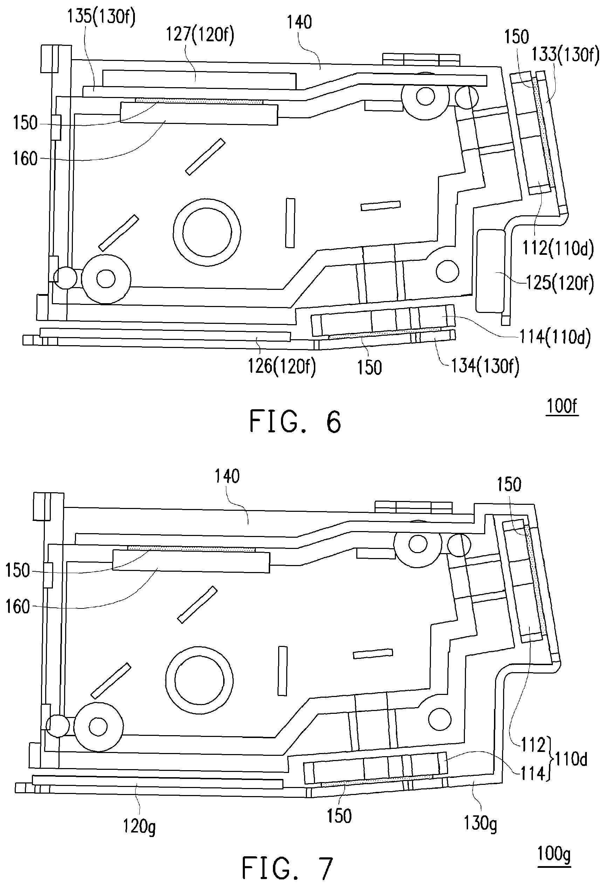

FIG. 6 is a top view of a projection device according to another embodiment of the disclosure. Referring to FIG. 4 and FIG. 6, a projection device 100f of this embodiment is similar to the projection device 100d of FIG. 4, and the difference therebetween is that, in this embodiment, the heat source module further includes a light valve module 160 in addition to the light source module 110d, and the light valve module 160 is disposed in the optical engine module 140 and is located on the transmission path of the illumination beam to convert the illumination beam into an image beam. In other words, the light beam of this embodiment includes not only an illumination beam but also an image beam. Also, in addition to the first heat storage module 125 and the second heat storage module 126, the heat storage module 120f further includes a third heat storage module 127. In addition to the first heat dissipation connecting element 133 and the second heat dissipation connecting element 134, the heat dissipation connecting element 130f further includes a third heat dissipation connecting element 135. The light valve module 160 is connected to the third heat storage module 127 through the third heat dissipation connecting element 135. The first light source module 112 is connected to the first heat storage module 125 through the first heat dissipation connecting element 133. The second light source module 114 is connected to the second heat storage module 126 through the second heat dissipation connecting element 134. The heat of the light valve module 160 can be effectively dissipated through the third heat dissipation connecting element 135 and the third heat storage module 127. In other words, in this embodiment, each heat source module is correspondingly provided with a heat dissipation connecting element and a heat storage module, thereby each heat source module can effectively dissipate heat.

FIG. 7 is a top view of a projection device according to another embodiment of the disclosure. Referring to FIG. 5 and FIG. 7, a projection device 100g of this embodiment is similar to the projection device 100e of FIG. 5, and the difference therebetween is that, in this embodiment, the heat source module further includes a light valve module 160 in addition to the light source module 110d, and the light valve module 160 is disposed in the optical engine module 140 and is located on the transmission path of the illumination beam to convert the illumination beam into an image beam. In other words, the light beam of this embodiment includes not only an illumination beam but also an image beam. Herein, the first light source module 112, the second light source module 114, and the light valve module 160 are connected to a heat storage module 120g through a heat dissipation connecting element 130g. However, the disclosure is not limited to the above. In other embodiments, the heat dissipation connecting element 130g may also be connected to one or more heat storage modules, thereby the heat dissipation efficiency can be improved.

In another embodiment not shown, the projection device 100e further includes a casing. The casing is connected to the heat dissipation connecting element 130e, and the thermal interface material layer 150 is disposed between the casing and the heat dissipation connecting element 130e. Therefore, when the heat generated by the heat source module 110 is greater than the heat that can be stored by the heat storage module 120e, the heat may be transferred to the casing through the heat dissipation connecting element 130e to dissipate heat by convection between the casing and the outside. Accordingly, the heat would not be transferred back to the heat source module 110 and cause damage to the heat source module 110.

In summary of the above, the embodiments of the disclosure exhibit at least one of the following advantages or effects. In the projection device of the disclosure, the heat storage module includes the storage tank and the heat storage material, and the heat storage material is filled into the storage tank. The heat dissipation connecting element connects the heat source module and the heat storage module, and heat generated by the heat source module is transferred to the heat storage module through the heat dissipation connecting element. Accordingly, the heat storage module may quickly store the heat generated by the heat source module, so the projection device of the disclosure can maintain an optimal operating brightness during short-time operation. In addition, in the disclosure, since it is not required to provide the projection device with a fan, an advantage of miniaturization can be achieved.

The foregoing description of the exemplary embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the invention", "the disclosure" or the like does not necessarily limit the claim scope to a specific embodiment, and the reference to exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the disclosure is intended to be dedicated to the public regardless of whether the element or component is explicitly recited in the following claims.

## Claims

1. A projection device comprising:
a heat source module (110) configured to generate a light beam;
a heat storage module (120a) comprising a storage tank (121) and a heat storage material (122), wherein the heat storage material (122) is filled into the storage tank (121); and
a heat dissipation connecting element (130a) connecting the heat source module (110) and the heat storage module (120a), wherein heat generated by the heat source module (110) is transferred to the heat storage module (120a) through the heat dissipation connecting element (130a).

2. The projection device according to claim 1, wherein the heat storage material (122) comprises a phase change material or a heat capacity material having a specific heat capacity greater than 2000 J/(K kg), preferably the phase change material is a solid-liquid phase change material, and/or the phase change material comprises paraffin or indium alloy, and/or the heat capacity material comprises water or paraffin.

3. The projection device according to any one of the preceding claims, wherein the heat source module (110) comprises a light source module (110d), and the light beam comprises an illumination beam.

4. The projection device according to claim 3, further comprising an optical engine module (140) disposed on one side of the light source module (110d) and located on a transmission path of the illumination beam.

5. The projection device according to claim 3 or 4, wherein the light source module (110d) comprises a first light source module (112) and a second light source module (114), the heat storage module (120a) comprises a first heat storage module (125) and a second heat storage module (126), and the heat dissipation connecting element (130a) comprises a first heat dissipation connecting element (133) and a second heat dissipation connecting element (134).

6. The projection device according to claim 5, wherein the first light source module (112) is connected to the first heat storage module (125) through the first heat dissipation connecting (133) element, and the second light source module (114) is connected to the second heat storage module (126) through the second heat dissipation connecting element (134).

7. The projection device according to claim 3 or 4, wherein the light source module (110d) comprises a first light source module (112) and a second light source module (114), and the first light source module (112) and the second light source module (114) are connected to the heat storage module (120a) through the heat dissipation connecting element (130a).

8. The projection device according to claim 3 or 4, wherein the heat source module (120a) further comprises a light valve module (160) disposed in the optical engine module (140),
the light beam further comprises an image beam,
the light source module (110d) comprises a first light source module (112) and a second light source module (114),
the heat storage module (120a) comprises a first heat storage module (125), a second heat storage module (126), and a third heat storage module (127), and
the heat dissipation connecting element (130a) comprises a first heat dissipation connecting element (133), a second heat dissipation connecting element (134), and a third heat dissipation connecting element (135),
wherein the first light source module (112) is connected to the first heat storage module (125) through the first heat dissipation connecting element (133), the second light source module (114) is connected to the second heat storage module (126) through the second heat dissipation connecting element (134), and the light valve module (160) is connected to the third heat storage module (127) through the third heat dissipation connecting element (135).

9. The projection device according to claim 3 or 4, wherein the heat source module (110) further comprises a light valve module (160) disposed in the optical engine module (140),
the light beam further comprises an image beam, and
the light source module (110d) comprises a first light source module (112) and a second light source module (114),
wherein the first light source module (112), the second light source module (114), and the light valve module (160) are connected to the heat storage module (120a) through the heat dissipation connecting element (130a).

10. The projection device of to any one of the preceding claims, wherein the heat source module (120a) comprises a light valve module (160), and the light beam comprises an image beam.

11. The projection device according to any one of the preceding claims, wherein the heat dissipation connecting element (130a) comprises at least one of a heat pipe, a vapor chamber, or a heat dissipation plate.

12. The projection device according to any one of the preceding claims, further comprising a thermal interface material layer (150) disposed between the heat source module (110) and the heat dissipation connecting element (130a) and between the heat storage module (120a) and the heat dissipation connecting element (130a), preferably the thermal interface material layer (150) comprises a thermal grease or a thermally conductive film.

13. The projection device according to any one of the preceding claims, wherein the heat storage module (120a) comprises a body part (123) and a heat dissipation fin part (132), preferably the body part (123) comprises the storage tank (121), and the heat dissipation fin part (132) is connected to the body part (123) and is located above the storage tank (121).

14. The projection device according to any one of the preceding claims 1-12, wherein the heat dissipation connecting element (130a) comprises a body part (123) and a heat dissipation fin part (132), preferably the body part (123) has an upper surface (1311) and a lower surface (1312) opposite to each other, the heat source module (110) and the heat storage module (120a) are located on the upper surface (1311), and the heat dissipation fin part (132) is connected to the body part (123) and is located on the lower surface (1312).

15. The projection device according to claim 14, wherein an orthographic projection of the storage tank (121) on the body part (123) overlaps with an orthographic projection of the heat dissipation fin part (132) on the body part (123).
